(19) **Europäisches Patentamt**

**European Patent Office**

**Office européen des brevets**

(11) Veröffentlichungsnummer: **0 077 908**
**B1**

(12) # EUROPÄISCHE PATENTSCHRIFT

(45) Veröffentlichungstag der Patentschrift:
**20.11.86**

(21) Anmeldenummer: **82108397.9**

(22) Anmeldetag: **11.09.82**

(51) Int. Cl.⁴: **F 04 B  49/00,** G 01 N  30/22,
B 01 D  15/08, F 04 B  43/02

(54) **Vorrichtung zum Fördern von Flüssigkeit gegen hohen Druck.**

(30) Priorität: **08.10.81  DE 3139925**

(43) Veröffentlichungstag der Anmeldung:
**04.05.83 Patentblatt 83/18**

(45) Bekanntmachung des Hinweises auf die Patenterteilung:
**20.11.86 Patentblatt 86/47**

(84) Benannte Vertragsstaaten:
**DE FR GB**

(56) Entgegenhaltungen:
**DE - A - 2 649 593**
**DE - A - 2 922 689**
**DE - A - 2 931 017**
**DE - A - 3 035 770**
**US - A - 4 128 476**
**US - A - 4 131 393**
**US - A - 4 137 011**
**US - A - 4 180 375**

(73) Patentinhaber: **Hewlett-Packard GmbH, Herrenberger Strasse 130 Postfach 14 30, D-7030 Böblingen (DE)**

(72) Erfinder: **Schrenker, Helge, Fritz-Erler-Strasse 7, D-7500 Karlsruhe 1 (DE)**

(74) Vertreter: **Schulte, Knud, Dipl.-Ing., c/o Hewlett-Packard GmbH Europ. Patent- und Lizenzabteilung Postfach 1430 Herrenberger Strasse 130, D-7030 Böblingen (DE)**

## Beschreibung

Die Erfindung betrifft eine Vorrichtung zum Fördern von Flüssigkeit gegen hohen Druck nach dem Oberbegriff des Anspruchs 1.

Derartige Vorrichtungen werden insbesondere in Flüssigkeitschromatographen zum Fördern von Lösungsmittelgemischen eingesetzt, wobei in den Lösungsmittelstrom eine Materialprobe injiziert wird, die mit dem Lösungsmittelstrom eine Trennsäule passiert und dabei in ihre einzelnen Bestandteile zerlegt wird. Vorzugsweise wird die Zusammensetzung des Lösungsmittelgemisches zur Erzielung hoher Auflösung während des Analysevorganges variiert, was als Gradientenelution bezeichnet wird.

Die Hochdruck-Kolben- und -Kolben-Membran-Dosierpumpen, die in derartigen Vorrichtungen eingesetzt werden, haben die nachteilige Eigenschaft, dass ihr mittlerer Förderstrom $\bar{V}$ (mittleres gefördertes Flüssigkeitsvolumen pro Zeiteinheit) bei gegebener Einstellung von Kolbenhub und -frequenz vom Förderdruck und von der Art und der Zusammensetzung der geförderten Flüssigkeit abhängt. Dies wird verursacht durch die Kompressibilität $\varkappa$ der gepumpten Flüssigkeit und die Elastizität der beteiligten Konstruktionselemente der Pumpe. Bei sogenannten Kolben-Membranpumpen, bei denen die Bewegung des Arbeitskolbens durch Hydraulikflüssigkeit auf eine flexible Membran und von dieser auf die Förderkammer übertragen wird, kommt dazu die Kompressibilität der Hydraulikflüssigkeit. Ein vom Förderdruck und der geförderten Flüssigkeit abhängiger Teil des Druckhubes wird dazu verbraucht, die in die Förderkammer angesaugte Flüssigkeit auf Förderdruck zu komprimieren (Kompressionsphase). Die eigentliche Förderphase der Pumpe setzt deshalb um einen Phasenwinkel $\varphi_1$ der Antriebskurbel gegenüber dem unteren Totpunkt des Kolbens verspätet ein. Bei diesem Phasenwinkel $\varphi_1$ öffnet auch das Auslassventil der Pumpe. Die Förderphase dauert dann bis zum oberen Totpunkt (Phasenwinkel $\pi$). Ebenso setzt die Ansaugphase nicht sofort nach Überschreiten des oberen Totpunktes, sondern verzögert bei einem Phasenwinkel $\varphi_2(>\pi)$. Die Verzögerung wird bewirkt durch eine Dekompressionsphase bis zur Entspannung des in der Förderkammer verbleibenden Flüssigkeitsvolumens und der beteiligten elastischen Konstruktionselemente der Pumpe.

Die jeweiligen Anteile von Kompressions- und Dekompressionsphase an der Kolbenbewegung sind verschieden, vor allem wegen der bei deren Beginn jeweils unterschiedlichen Flüssigkeitsmenge in der Förderkammer. Am unteren Totpunkt, d.h. bei Beginn der Kompressionsphase, befinden sich das Kolbenhubvolumen $\hat{V}_d$ und das nach Ende der Förderphase in der Förderkammer verbleibende Restvolumen $V_o$ in der Förderkammer. Das auf Förderdruck p zu komprimierende Flüssigkeitsvolumen beträgt also $V_o + \hat{V}_d$. Dagegen befindet sich am oberen Kolbentotpunkt, d.h. bei Beginn der Dekompressionsphase, nur noch das Restvolumen $V_o$ in der Förderkammer. Das vom Förderdruck auf Saugdruck (Unterdruck) zu dekomprimierende Flüssigkeitsvolumen beträgt also $V_o$. Der Einfluss von elastischen Konstruktionselementen und ggf. Hydraulikflüssigkeit sollte sich dagegen auf Kompressions- und Dekompressionsphase gleich auswirken. Trotzdem wäre aus eventueller Kenntnis von $\varphi_1$ nicht ohne weiteres auf $\varphi_2$ zu schliessen, da deren Verhältnis neben dem Verhältnis von $V_o$ zu $\hat{V}_d$ auch von dem Verhältnis zwischen der Kompressibilität $\varkappa$ der geförderten Flüssigkeit und der Elastizität der Konstruktionselemente der Pumpe und ggf. auch der Kompressibilität der Hydraulikflüssigkeit bestimmt wird. $\varkappa$ ist indessen bei der häufig vorkommenden Förderung von Flüssigkeitsgemischen von deren Art und deren im allgemeinen variablen Mischungsverhältnis abhängig und ist ausserdem eine Funktion des Förderdruckes, also keine als näherungsweise konstant oder bekannt vorauszusetzende Grösse. Auf diese Tatsache wird weiter unten noch näher eingegangen.

Besonders hohe Anforderungen an die Förderstromkonstanz werden in der Hochleistungs-Flüssigkeitschromatographie gestellt, da die Genauigkeit quantitativer Analysen ganz wesentlich hiervon mitbestimmt wird.

Es werden verschiedene Fördervorrichtungen verwendet, um trotz hohen Gegendrucks einen definierten, möglichst konstanten und reproduzierbaren Förderstrom unabhängig von Druck, Art und Zusammensetzung der geförderten Flüssigkeit zu erzeugen. Die bekannten Lösungswege lassen sich grob in sechs Gruppen einteilen:

1. Messung des Ausgangs-Förderstromes der Pumpe, Vergleich des Messwerts mit einem vorgegebenen Sollwert und Korrektur der Pumpeneinstellung bei auftretenden Abweichungen über den aus Messvorrichtung, Vergleicher, Stellglied und Pumpe gebildeten Regelkreis (siehe US-PS 3 917 531 und DE-PS 2 263 768). Es werden hierbei durchweg indirekte, teilweise konstruktiv aufwendige Strömungsmessverfahren verwendet, bei denen stets eine Kalibrierung erforderlich ist.

2. Konstanthaltung des Förderdruckes der Pumpe durch eine Druckregeleinrichtung unabhängig von der Grösse der nachgeschalteten Strömungswiderstände (siehe Publikation Nr. 03-913807-00, Juni 1978, der Firma Varian Associates). Hierbei wird zwar der Einfluss eines sich ändernden Förderdruckes auf den Förderstrom vermieden, nicht aber der Einfluss der Kompressibilität der geförderten Flüssigkeit, so dass bei Änderungen der Kompressibilität eine gewisse Förderstromänderung verbleibt.

3. Laufende Messung des Förderdruckes der Pumpe stromabwärts vom Auslassventil und Ableitung eines Steuersignals für den Antrieb der Pumpe aus dem Druckmesssignal, durch das die Hubfrequenz bei steigendem Förderdruck zur Kompensation der erhöhten Flüssigkeitskompression erhöht wird und umgekehrt (DE-PS 2 311 016). Für jede Förderflüssigkeit ist hierbei eine individuelle Einstellung (Eichung) der Steuereinrichtung notwendig, und bei Förderung von Flüssigkeiten variierender Kompressibilität ist die Kompensation überhaupt nur unvollständig.

4. Bei Doppelkolbenpumpen mit zwei um $\pi$ phasenverschoben arbeitenden Förderkammern macht sich die jeweilige Kompressionsphase als kurzzeitiger Druckeinbruch bemerkbar, der stromabwärts vom Auslassventil messbar ist. Diese Druckeinbrüche werden gemäss US-PS 4 137 011 durch eine schnelle, auf den Pumpenantrieb wirkende Druckregelung ausgeglichen, welche durch starke Beschleunigung des Antriebs während der Kompressionsphasen die Druckeinbrüche glättet und damit den zeitlichen Anteil der Kompressionsphasen am Pumpenzyklus und damit auch deren Anteil an der Bildung des Förderstroms stark reduziert. Durch zusätzliche Speicher- und Nachführeinrichtungen wird der Sollwert für die Druckregelung bei Änderung der Strömungswiderstände automatisch nachgeführt. Mit dieser Einrichtung ist zwar die weitgehende Konsthaltung des auf Förderdruck bezogenen mittleren Förderstromes $\bar{V}_p$ erreichbar. Besonders in der Flüssigkeitschromatographie ist indessen die Konstanthaltung des auf die entspannte Flüssigkeit bezogenen mittleren Förderstromes $\bar{V}_o$ wegen dessen direkten Einflusses auf das quantitative Analyse-Ergebnis wünschenswert. Zwischen beiden Förderströmen besteht in erster Näherung die Beziehung

$$\bar{V}_p = \bar{V}_o(1 - \varkappa p)$$

d.h. bei konstant gehaltenem $\bar{V}_p$ ändert sich $\bar{V}_o$ immer noch mit dem Förderdruck p und der Kompressibilität $\varkappa$ der geförderten Flüssigkeit.

5. Trennung der Aufgaben der Volumendosierung (Erzeugung eines konstanten Förderstromes $\bar{V}_o$) und der Druckerzeugung (siehe DE-PS 2 612 609 und DE-OS 2 931 017). Hierbei wird einer nahezu drucklos fördernden Dosierpumpe eine Hochdruckpumpe nachgeschaltet, wobei entweder die Hochdruckpumpe so konstruiert ist, dass sie zwangsläufig jede von der Dosierpumpe gelieferte Fördermenge auf den zur Überwindung der nachgeschalteten Strömungswiderstände erforderlichen Druck bringt, oder zwischen Dosierpumpe und Druckerzeugungspumpe noch ein Regler geschaltet ist, der durch Nachführung der Druckerzeugungspumpe für den laufenden Ausgleich der Förderstrombilanz zwischen beiden Pumpen sorgt. Dieser Lösungsvorschlag erfüllt die Forderung nach konstantem Förderstrom $\bar{V}_o$, ist jedoch aufwendig, da mindestens eine Dosierpumpe und eine Druckerzeugungspumpe benötigt werden.

6. Messung des Innendruckes in der Pumpenkammer mit einem Druckwandler (DE-OS 2 922 689, indirekte Messung in US-PS 4 180 375, DE-OS 2 759 056) sowie Messung des Förderdruckes der Pumpe stromabwärts vom Auslassventil und Ableitung eines Steuersignals für den Antrieb der Pumpe aus der Differenz der beiden Drucksignale. Hierbei wird der Kolben während der Zeitdauer, in der die Differenz Null ist, mit einer konstanten, der gewünschten Durchflussmenge entsprechenden Lineargeschwindigkeit und zu allen übrigen Zeiten mit der höchstmöglichen Geschwindigkeit vorwärtsbewegt. Hierdurch soll ein konstanter Ausgangs-Förderstrom erreicht werden. Dieses Verfahren führt jedoch nicht zu einem konstanten Förderstrom der entspannten, d.h. nicht unter Arbeitsdruck stehenden Flüssigkeit, wenn deren Kompressibilität sich ändert, wie bereits erläutert wurde.

Insbesondere auch bei der Erzeugung von Mischungsgradienten (Gradientenelution) muss der mittlere Förderstrom konstant gehalten werden, und es ergibt sich die zusätzliche Schwierigkeit, einen hinreichend genauen und reproduzierbaren Mischungsverlauf zu erreichen. Bekannt ist hierfür die Verwendung je einer Dosierpumpe mit Förderstromprogrammierung pro Mischungskomponente, die jedoch technisch aufwendig und deshalb kostspielig ist. Deutlich kostengünstiger ist der zeitprogrammierte Wechsel der an der Saugseite einer Pumpe angelieferten Mischungskomponenten während der Saugphase der Pumpe durch Proportionierventile in der Saugleitung. Hierbei muss die Dekompressionsphase der Pumpe in geeigneter Weise im Steuerprogramm der Ventile berücksichtigt werden.

Bei der unter 2. beschriebenen Pumpenanordnung ist das Pumpeneinlassventil derart mit dem Pumpenantrieb synchronisiert, dass es gegenüber dem unteren Kolbentotpunkt um einen konstanten Phasenwinkel $\varphi$ verzögert öffnet. Der jeweilige Beginn des Ventilsteuerzyklus ist mit dem Öffnungszeitpunkt des Saugventils synchronisiert (siehe auch DE-OS 2 649 593). Wegen der Unveränderbarkeit der Öffnungsverzögerung während des Betriebs der Pumpe kann diese Synchronisationsmethode nur für eine bestimmte Kompressibilität $\varkappa$ der geförderten Flüssigkeit ganz korrekt sein.

Für die unter 4. beschriebene Pumpenanordnung ist in der US-PS 4 128 476 eine Methode angegeben, bei der die zeitliche Lage der Minima der Einbrüche des stromabwärts vom Auslassventil der Pumpe gemessenen Druckes relativ vom oberen Kolbentotpunkt als Indikator für die Dauer der Kompressionsphase benutzt wird. Weiterhin wird dieser Messwert mit einem konstanten Faktor multipliziert, der das Verhältnis zwischen Kompressions- und Dekompressionsphase berücksichtigen soll. Es wird also von der gemessenen Dauer der Kompressionsphase auf die für die Synchronisation der Proportionierventile benötigte Dauer der Dekompressionsphase rückgeschlossen. Dieser Rückschluss kann aber, wie eingangs ausgeführt wurde, nur für eine mittlere Kompressibilität der geförderten Flüssigkeit korrekt sein. Weicht die tatsächliche Kompressibilität von diesem mittleren Wert ab, so kann es je nach Pumpenkonstruktion zu mehr oder weniger grossen Fehlern bei der Synchronisation der Proportionierventile kommen.

Das unter 6. beschriebene Druckmessverfahren ist bei einer Gradientenelution von Flüssigkeiten unterschiedlicher Kompressibilität nachteilig, weil Variationen der Kompressibilität der Flüssigkeit auch bei druckseitig konstant gehaltenem mittleren Förderstrom zu Variationen des saugseitigen Förderstromes führen. Es wird dort auch nicht aufgezeigt, wie eine saugseitig angeordnete Gradientenproportioniereinrichtung mit Hilfe der vorgeschlagenen Mess- und Regeleinrichtung angesteuert werden soll.

Gegenüber DE-OS 2 922 689 wird durch das Kennzeichen des Anspruchs 1 die Vorrichtung gemäss dessen Oberbegriff so weitergebildet, dass der Ansaugstrom der zur Flüssigkeitsförderung dienenden Pumpe sowohl bei variierender Kompressibilität der geförderten Flüssigkeit als auch bei variierendem Gegendruck konstant gehalten werden kann.

Erfindungsgemäss wird demnach die Phasenlage des Überganges von der Dekompressionsphase zur Ansaugphase gemessen, und aus dieser Messung werden Steuersignale zum Einstellen und Konstanthalten des mittleren Ausgangsstromes der Pumpe unabhängig vom Förderdruck und von den Eigenschaften der geförderten Flüssigkeit abgeleitet. Es wird also der Messwert für den Phasenwinkel $\varphi_2$ herangezogen, um den mittleren Förderstrom $V_o$ der entspannten Flüssigkeit konstant zu halten.

Nach Anspruch 4 kann aus dem Messwert $\varphi_2$ ein Synchronisiersignal zum exakten, druck- und kompressibilitätskompensierten Steuern vom Proportionierventilen in der Pumpensaugleitung für die Gradientenelution abgeleitet werden.

Ist gemäss Anspruch 5 der Pumpe eine Pulsationsdämpfungseinrichtung nachgeschaltet, so lässt sich deren mittleres Volumen nach Anspruch 6 unabhängig vom Förderdruck konstant halten.

Das Verhältnis zwischen Kompressionsphase $\varphi_1$ und Dekompressionsphase $\varphi_2 - \pi$ lässt sich zur laufenden Überwachung der korrekten Funktion der Pumpe, insbesondere zur Erkennung von Undichtigkeiten der Aus- und Einlassventile und des Auftretens von Luftblasen während der Saugphase in der Förderkammer heranziehen. Ist der Pumpe eine Pulsationsdämpfungseinrichtung nachgeschaltet, so lässt sich deren mittleres Volumen unabhängig vom Förderdruck zur Sicherstellung konstanter Verzögerung zwischen Programmstand der Mischungseinrichtung und am Ausgang der Dämpfungseinrichtung angeliefertem Mischungsverhältnis bei gegebenen Förderstrom konstant halten.

Die Erfindung wird im folgenden anhand eines Ausführungsbeispiels in Verbindung mit der zugehörigen Zeichnung erläutert. In der Zeichnung zeigen:

Figur 1 schematisch eine Kolbenpumpe zur Erläuterung der Erfindung zugrundeliegenden Problematik;

Figur 2 den Verlauf verschiedener Betriebsgrössen der Pumpe gemäss Figur 1 in Abhängigkeit vom Phasenwinkel $\varphi$;

Figur 3 das Blockschaltbild einer erfindungsgemässen Pumpenanordnung mit zugehöriger Regelschaltung und

Figur 4 den in Figur 3 enthaltenen Pulsationsdämpfer im Detail.

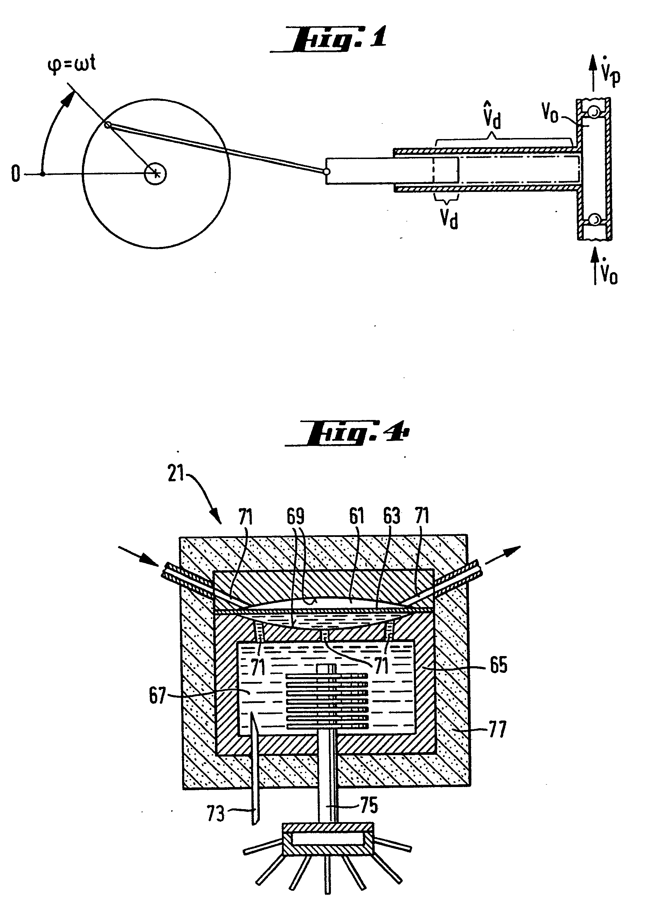

In Figur 1 bedeuten $\varphi = \omega t$ die Winkellage (Phasenwinkel) der Antriebskurbel, $\omega$ die Winkelgeschwindigkeit der Antriebskurbel, $V_d$ die momentane Volumenverdrängung des Kolbens, $\hat{V}_d$ den Hubraum des Kolbens, $V_o$ das Totvolumen der Pumpe, $\dot{V}_o$ die Durchflussmenge (Förderstrom) der drucklosen Flüssigkeit und $\dot{V}_p$ den Förderstrom der auf Förderdruck p komprimierten Flüssigkeit. Die in Figur 1 dargestellte Pumpe stellt das bekannte Grundschema einer Kolbenpumpe mit Pumpenzylinder, Ein- und Auslassventil, Kolben und Kurbeltrieb dar, das hier nicht weiter erläutert zu werden braucht. Die Volumenverdrängung beträgt

$$V_d = 0,5\ \hat{V}_d\ (1 - \cos\ \varphi).$$

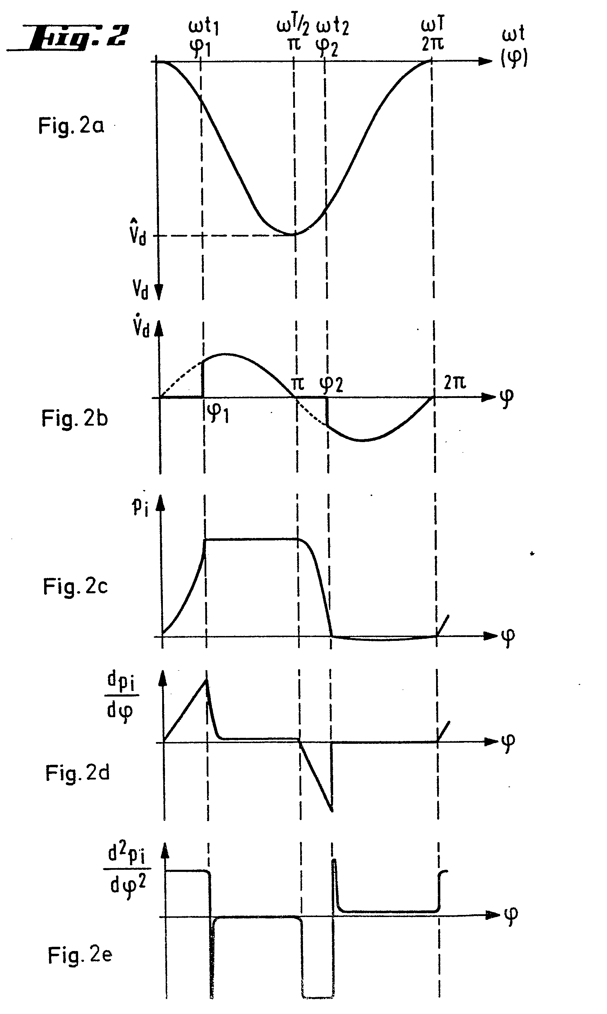

Der Verlauf dieser Kurve ist in Figur 2 (a) dargestellt. Daraus folgt der vom Kolben initiierte Förderstrom zu

$$\dot{V} = 0,5\ \hat{V}_d\ \sin\ \varphi,$$

jedoch nur für $\varphi_1 \leq \varphi \leq \pi$ (fördern) und $\varphi_2 \leq \varphi \leq 2\pi$ (ansaugen) bzw. $t_1 \leq t \leq T/2$ und $t_2 \leq t \leq T$ (Figur 2 (b)); dabei sind $\varphi_1$ und $\varphi_2$ die Grenzwinkel von Kompressions- bzw. Dekompressionsphase, d.h. die Kompressionsphase reicht von 0 bis $\varphi_1$, und die Dekompressionsphase reicht von $\pi$ bis $\varphi_2$.

Wie bereits oben erwähnt wurde, ist für Anwendungen in der Flüssigkeitschromatographie der Förderstrom der drucklosen Flüssigkeit, also $\dot{V}_o$ von Interesse. Deshalb wird im folgenden nur dieser betrachtet. Selbstverständlich lässt sich sinngemäss aber auch der Förderstrom der komprimierten Flüssigkeit, also $\dot{V}_p$ sinngemäss einstellen und konstant halten.

Das während eines Pumpenzyklus T von der Pumpe angesaugte Flüssigkeitsvolumens beträgt

$$-V_{oi} = \int_{\varphi2}^{2\pi} 0,5\ \hat{V}_d\ \sin\ \varphi = 0,5\ \hat{V}_d\ (\cos\ \varphi_2 - 1).$$

Der über den Pumpenzyklus T gemittelte Ansaugstrom $\bar{V}_o$ beträgt demnach

$$-\bar{V}_o = \frac{V_{oi}}{T} = \frac{0,5\ \hat{V}_d}{T}\ (\cos\ \varphi_2 - 1)$$

Die zur Erzeugung eines bestimmten mittleren Förderstromes $V_o$ erforderliche Zyklusdauer T der Pumpe ergibt sich also zu

$$T = \frac{0,5\ \hat{V}_d}{\bar{V}_o}\ (1 - \cos\ \varphi_2) \qquad (1)$$

Dies ist der zur erfindungsgemässen Regelung der Pumpe auf einen gewünschten und konstanten mittleren Förderstrom $\bar{V}_o$ benötigte Regelalgorithmus, dessen Anwendung die laufende Messung von $\varphi_2$, also des jeweiligen Endpunktes der Dekompressionsphase bzw. des Öffnungspunktes des Einlassventils erfordert. Figuren 2 (c) bis (e), die den Pumpeninnendruck $p_i$ über dem Phasenwinkel $\varphi$ bzw. die erste und zweite Ableitung des Pumpeninnendrucks über dem Phasenwinkel $\varphi$

darstellen, erläutern, wie die Phasenwinkel $\varphi_1$ und $\varphi_2$ gemessen werden. Das aus der zweiten Ableitung $\ddot{p}_i$ des mit einem geeignetem Druckaufnehmer gemessenen Pumpeninnendruckes $p_i$ erhaltene Signal zeigt an der Übergangsstelle zwischen Dekompressionsphase und Saugphase ($\varphi_2$), wie auch an der Übergangsstelle zwischen Kompressionsphase und Förderphase ($\varphi_1$) eine sehr steile Flanke mit Vorzeichenwechsel. Die Messung des Zeitpunktes, zu dem diese Flanke auftritt, ergibt bei Korrelation mit der momentanen Winkelstellung der Kurbelwelle $\varphi(t)$, gemessen mit einem Winkelkodierer, die benötigten Phasenübergangswinkel $\varphi_1$ und $\varphi_2$.

Neben der Verarbeitung von $\varphi_2$ im Regelalgorithmus der Pumpe und zur Steuerung des Pumpensaugventils ist dieser Messwert weiterhin als Synchronisiersignal für die Steuerung von Proportionierventilen in der Pumpensaugleitung zur Erzeugung von Mischungsgradienten, z.B. aus zwei Mischungskomponenten A und B verwendbar. Ist durch die Proportionierventil-Einrichtung die Saugseite der Pumpe ab der Kurbelwellenstellung $\varphi_2$ mit dem Vorratsgefäss für die Mischungskomponente A und ab der Kurbelwellenstellung $\varphi_3$ mit dem Vorratsgefäss für die Mischungskomponente B verbunden, so gilt für den mittleren prozentualen Anteil der Mischungskomponente B in der Mischung (A + B) die Beziehung

$$\% \, B = \frac{\cos \varphi_3 - 1}{\cos \varphi_2 - 1} \cdot 100$$

Der zur Erzeugung eines bestimmten mittleren Mischungsverhältnisses % B in (A + B) erforderliche Ventilumschaltpunkt ergibt sich also zu

$$\varphi_3 = -\arccos \left[ \frac{\% B (\cos \varphi_2 - 1)}{100} + 1 \right] + 2\pi \quad (2)$$

Dies ist der zur Steuerung einer Proportionierventil-Einrichtung für zwei Mischungskomponenten A und B benötigte Steueralgorithmus, der sich ggf. auf drei oder mehr Komponenten sinngemäss erweitern lässt.

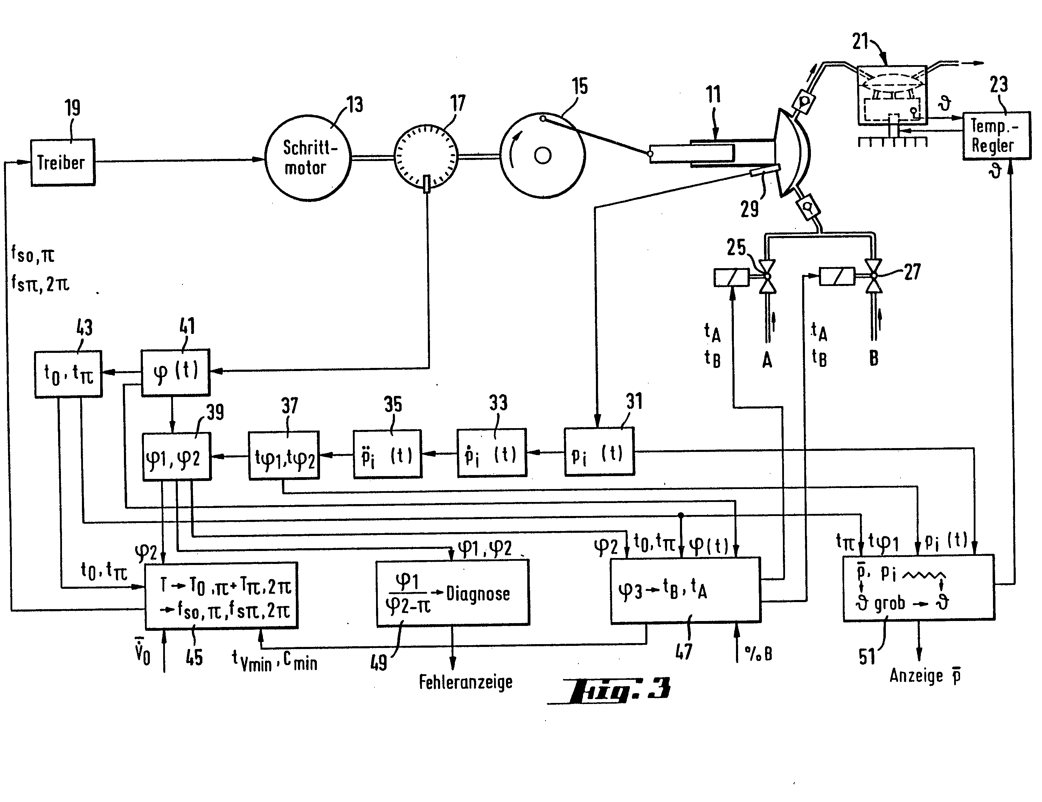

Der Aufbau einer erfindungsgemässen Regeleinrichtung für den Förderstrom und der Steuereinrichtung für das Mischungsverhältnis (im vorliegenden Beispiel aus zwei Komponenten), der durch eine Kolben- oder Kolben-Membran-Dosierpumpe geförderten Flüssigkeit ist in Figur 3 dargestellt.

Mit 11 ist eine Kolben-Membranpumpe bezeichnet, die von einem Schrittmotor 13 über eine Kurbelwelle 15 angetrieben wird. Die Winkelstellung der Kurbelwelle 15 wird durch einen Winkelcodierer 17 erfasst. Der Schrittmotor 13 wird von einer Treiberschaltung 19 angesteuert.

Der Pumpe 11 ist auf der Hochdruckseite ein Pulsationsdämpfer 21 mit einem Temperaturregler 23 nachgeschaltet, auf die weiter unten noch näher eingegangen wird. Auf der Saugseite der Pumpe 11 befinden sich Proportionierventile 25 und 27 für zwei Mischungskomponenten A und B. Der Innendruck in der Pumpe 11 wird mittels eines Druckfühlers 29 gemessen.

Der Druckfühler 29 ist mit einem Drucksignalgeber 31 verbunden, der seinerseits über Differenzierglieder 33 und 35 und einen Nulldurchgangsdetektor 37 mit einem Phasenübergangsgeber 39 verbunden ist. Der Winkelcodierer 17 ist mit einem Winkelsignalgeber 41 verbunden, der wiederum mit einem Totpunktgeber 43 verbunden ist. Auswerte- und Regelschaltungen 45, 47, 49 und 51 empfangen ausgewählte Signale von den vorgenannten Signalgebern 31, 37, 39, 41 und 43 und geben Anzeige- bzw. Regelsignale ab. Die dynamische Messung des Innendruckverlaufes $p_i$ (t) in der Pumpe 11 kann im Falle einer Kolben-Membranpumpe im Bereich der Hydraulik-Flüssigkeit oder direkt in der Förderkammer mittels eines totvolumenarmen Druckaufnehmers mit bündig verschweisster Übertragungsmembran und ausreichend hoher Eigenfrequenz (z.B. > 5 kHz für eine Pumpenhubfrequent von 5 bis 10 Hz) erfolgen. Die Stellung $\varphi(t)$ der Kurbelwelle 15 wird mittels des Winkelcodierers 17 gemessen, der vorzugsweise optoelektronisch arbeitet und eine Teilkreisauflösung von besser als 1:500 aufweist. Als $\varphi = 0$ ist der untere Kolbentotpunkt (Beginn der Kompressionsphase) definiert. Das Drucksignal $p_i(t)$ wird vom Drucksignalgeber 31 verstärkt und von den Differenziergliedern 33 und 35 zweimal differenziert. Aus der zweiten Ableitung $\ddot{p}_i$ (t) werden mittels des Nulldurchgangsdetektors 37, der auch als flankengetriggerter Detektor ausgebildet sein kann, die Zeitpunkte für die Phasenwinkel $\varphi_1$ und $\varphi_2$ ermittelt, aus denen der Phasenübergangsdetektor 39 unter Benutzung des Ausgangssignals des Winkelsignalgebers 41 die Phasenwinkel $\varphi_1$ und $\varphi_2$ ableitet.

Die Steuerung des Schrittmotors 13 der Pumpe 11 erfolgt durch die Auswerte- und Regelschaltung 45. Entsprechend dem Regelalgorithmus gemäss Gleichung (1) wird aus der Sollwertvorgabe für den Förderstrom $\bar{V}_o$ und $\varphi_2$ zunächst T, die für eine volle Kurbelwellenumdrehung verfügbare Zeit ermittelt. Nachdem Gleichung (1) keine weitere Forderung, etwa über die Art des Bewegungsablaufs zwischen 0 und $2\pi$ enthält, wird dieser im Hinblick auf günstige Voraussetzungen für die Steuerung der Proportionierventile 25 und 27 und die Pulsationsdämpfung optimiert. Im einzelnen wird T in zwei Teilzeiten, nämlich $T_{o,\pi} + T_{\pi, 2\pi}$ unterteilt, wobei

$$T_{o,\pi} + T_{\pi, 2\pi} = T$$

gilt. Die Schrittfrequenz $f_s$ des für den Pumpenantrieb verwendeten Schrittmotors wird aus diesen Zeiten zu

$$f_{s\,o,\pi} = \frac{N}{2T_{o,\pi}} \text{ und } f_{s\pi, 2\pi} = \frac{N}{2T_{\pi, 2\pi}}$$

ermittelt, wobei N die Schrittzahl des Schrittmotors für eine Umdrehung ist.

Hinsichtlich der Aufteilung von T in $T_{o,\pi}$ und $T_{\pi,2\pi}$ wird wie folgt verfahren:

Es sei $C_{min}$ die gewünschte Minimalkonzentration einer der Komponenten A und B in der Mischung, und $t_{Vmin}$ sei die kleinste mit den Proportionierventilen realisierbare Öffnungszeit. Daraus ergibt sich für ein ordnungsgemässes Funktionieren der Proportionierventile die Mindestforderung

$$T_{\pi, 2\pi} = \frac{\pi^t V_{min}}{2 C_{min}},$$

$$T_{o, \pi} = \frac{0,5 V_d}{\bar{V}_o} (1 - \cos \varphi_2) - \frac{\pi^{\ t}Vmin}{2\ C_{min}} \quad \text{und} \quad f_{s\,o,\,\pi} = \frac{N}{2T_{o,\,\pi}} \qquad (1a)$$

$$T_{\pi, 2\pi} = \frac{\pi^{\ t}Vmin}{2\ C_{min}} \quad \text{und} \quad f_{s\pi,\,2\pi} = \frac{N}{2T_{\pi,\,2\pi}} \qquad (1b)$$

Auf diese Weise wird erreicht, dass der Anteil der Saugphase am Gesamtzyklus immer gerade so gross ist, um eine hinreichend genaue Funktion der Proportioniereinrichtung sicherzustellen, wobei sich dann der Anteil der Förderphase auf den jeweils grösstmöglichen Wert einstellt, mit dem Ergebnis besserer Pulsationsdämpfung des Förderstromes, besonders bei kleinem Förderstrom und daraus resultierender grosser Periodendauer T.

Die Auswerte- und Regelschaltung 45 gibt weiterhin zum Zeitpunkt $t\varphi_2$ das Signal zum Öffnen des Pumpeneingangsventils 12 und zum Zeitpunkt $t_o$ das Signal zum Schliessen des Pumpeneingangsventils 12.

Die Auswerte- und Regelschaltung 47 steuert die Proportionierventile 25 und 27, im vorliegenden Fall also das Mischungsverhältnis zwischen den Komponenten A und B bzw. die Volumenkonzentration %B in (A + B). Aus dem Signal $\varphi(t)$ wird zunächst der Zeitpunkt $t_\pi$ des Kurbelwellendurchgangs durch den oberen Kolbentotpunkt ermittelt, und zu diesem Zeitpunkt wird das Proportionierventil 25 geöffnet, während das Proportionierventil 27 geschlossen wird. Entsprechend dem Steueralgorithmus gemäss (2) werden aus $\varphi_2$ und der Sollwertvorgabe für die Volumenkonzentration %B der Wert $\varphi_3$, sowie durch dessen Korrelation mit $\varphi(t)$ der Ventilschaltzeitpunkt $t_3$ ermittelt, und zu diesem Zeitpunkt wird das Proportionierventil 27 geöffnet, während das Proportionierventil 25 geschlossen wird.

Die Auswerteschaltung 49 dient zur Erkennung von Störungen in den Pumpenventilen usw. Hier wird das Verhältnis

$$\frac{\varphi 1}{\varphi 2 - \pi}$$

gebildet, das sich in einem bestimmten, für die Pumpenkonstruktion charakteristischen Bereich bewegen muss. Wird dieser Bereich deutlich überschritten, d.h. die Förderphase deutlich kleiner und/oder die Saugphase deutlich grösser als zu erwarten wäre, so weist dies entweder auf angesaugte Luftblasen oder auf ein nicht dicht schliessendes Einlassventil hin. Wird der Bereich deutlich unterschritten, so weist dies auf nicht dicht schliessendes Auslassventil hin. Die Ausdie sich auf den ungünstigsten Fall bezieht, dass der Eröffnungszeitpunkt für das den geringsten Mischungsanteil liefernde Ventil in den Bereich $\varphi \approx 1,5\pi$ fällt. Andererseits ist es im Interesse einer möglichst guten Pulsationsdämpfung wünschenswert, den Anteil $T_{o,\pi}$ in den die Förderphase fällt, so gross wie möglich zu machen. Deshalb wird $T_{\pi,2\pi}$ immer wie vorstehend vorgegeben, woraus dann für die Ansteuerung des Schrittmotors folgt:

werteschaltung 49 gibt dann ein entsprechendes Fehlersignal an eine Fehleranzeige ab.

Die Auswerte- und Regelschaltung 51 errechnet aus dem während jeweils einer Anzahl von Förderzyklen (z.B. n = 5) auftretenden mittleren Förderdruck $\bar{p}$ eine zur Druckkompensation des Volumens im Pulsationsdämpfer 21 erforderliche Temperatur. Dies hat folgenden Hintergrund:

Für die Glättung (Pulsationsdämpfung) des Förderstromes von Kolbendosierpumpen sind Einrichtungen im Gebrauch, die ein vom Förderstrom durchflossenes Volumen aufweisen, das sich proportional zum Förderdruck vergrössert bzw. verkleinert ($\Delta V = C\Delta p$), also die Funktion eines elektrischen Kondensators hydraulisch nachbilden. Bei der Anwendung in der Flüssigkeitschromatographie mit Programmierung eines Mischungsgradienten auf der Pumpensaugseite haben diese bekannten Einrichtungen den Nachteil, dass sich ihr Volumen bei hohem Förderdruck derart vergrössert, dass besonders bei kleineren Förderströmen beträchtliche Zeitverzögerungen zwischen dem Programmstand der Mischungseinrichtung und dem am Ausgang der Dämpfungseinrichtung tatsächlich angelieferten Mischungsverhältnis ergeben. Ausserdem würde bei sich änderndem Strömungswiderstand auch eine Änderung dieser Verzögerungszeit folgen, was eine Beeinträchtigung der Reproduzierbarkeit von Analysen nach sich ziehen könnte.

Figur 4 zeigt den in der Anordnung nach Figur 3 eingesetzten Pulsationsdämpfer 21 im Detail. Das von der geförderten Flüssigkeit durchströmte Dämpfungsvolumen 61 wird durch eine elastische Stahlmembran 63 von einer in einem druckfesten Behälter 65 und der Membran 63 eingeschlossenen elastischen Flüssigkeit 67 mit der Kompressibilität $\varkappa(p)$ und dem thermischen Ausdehnungskoeffizienten $\gamma$ getrennt. Die Membran 63 wird durch zwei kalottenförmig ausgebildete Anschlagflächen 69 mit Ein- und Auslassbohrungen 71 vor Überdehnungen bei Funktionsfehlern geschützt. Bei Druckanstieg im Dämpfungsvolumen 61 wird die eingeschlossene Flüssigkeit 67 komprimiert, und die Membran 63 wölbt sich in deren Richtung, was zur Vergrösserung des Volumens 61 führt. Dieser Effekt ist nur insoweit erwünscht, als die Vergrösserung maximal dem während eines Pumpenzyklus von der Pumpe gelieferten Flüssigkeitsvolumen entspricht, d.h. der Pulsationsdämpfer speichert einen Teil des während der Förderphase durch die Pumpe gelieferten Volumens und gibt diesen während des übrigen («unproduktiven») Teils des Pumpenzyklus wieder ab. Im vorliegenden Ausführungsbeispiel wird abweichend von bekannten Ausführungsformen der Bewegungsspielraum der Membran 63 durch die kalottenförmigen Anschlagflächen 69 auf etwa das vierfache dieses Wertes begrenzt. Ebenfalls abweichend von bekannten Ausführungsformen wird durch eine schnelle Regelung der Temperatur $\vartheta$ der eingeschlossenen Flüssigkeit 67 (Regelzeit max. 1 bis 2 min) sichergestellt, dass die Membran 63 sich unabhängig vom mittleren Förderdruck p etwa um ihre Neutrallage bewegt, und zwar nach folgender Beziehung:

$$\vartheta = \frac{1}{\gamma} \int_0^{\bar{p}} \varkappa(p)dp \qquad (3)$$

Der in Figur 4 dargestellte Pulsationsdämpfer weist dazu einen Temperaturfühler 73 und ein Peltier-Heiz-/Kühlelement 75 auf. Ausserdem ist der gesamte Pulsationsdämpfer von einem wärmeisolierenden Mantel 77 umschlossen.

Die Auswerte- und Regelschaltung 51 (Figur 3) benutzt die Beziehung gemäss (3) zunächst zur groben Annäherung an die für die Druckkompensation des Dämpfungsvolumens 61 erforderliche Temperatur. Die Feinabstimmung der Temperatur erfolgt nach der Überlegung, dass jeder Wert richtig ist, bei dem die Restpulsation $p_{i\wedge\!\wedge}$ des zwischen $\varphi_1$ und $\pi$ gemessenen Druckes ein Minimum erreicht, d.h. die Membran besitzt die zur Aufnahme des von der Pumpe je Zyklus gelieferten Volumens ausreichende freie Beweglichkeit. Die Auswerte- und Regelschaltung 51 ermittelt also folgende Daten:

$$\frac{1}{n} \sum_{(n)} \left( \frac{1}{t_\pi - t_{\varphi 1}} \int_{t_{\varphi 1}}^{t\pi} p_i dt \right) = \bar{p}$$

und daraus gemäss Gleichung (3) $\vartheta_{grob}$. Weiterhin:

$$P_{it\pi} - P_{it_{\varphi 1}} = P_{i\wedge\!\wedge}$$

daraus wird die Feinregelung von $\vartheta$ abgeleitet, bis $p_{i\wedge\!\wedge}$ ein Minimum durchläuft. $\vartheta_{grob}$ wird sinnvoll so gewählt, dass sich im eingeschlossenen Flüssigkeitsvolumen 61 ein für optimale Dämpfung zu hoher Druck einstellt, wonach durch die Feinregelung dann auf das Pulsationsminimum $p_{i\wedge\!\wedge \, min}$ heruntergegangen wird und der sich daraus ergebende Temperatursollwert festgehalten wird. Ändert sich dann $\bar{p}$ so wird gemäss Gleichung (3) ein neuer Temperatursollwert ermittelt usw. Das System ist auf diese Weise hinsichtlich der Einstellung der für optimale Dämpfung erforderlichen Temperatur selbsteichend, so dass keine besonders hohen Anforderungen an die absolute Genauigkeit der Temperaturmess- und -regeleinrichtung gestellt werden müssen.

**Patentansprüche**

1. Vorrichtung zum Fördern von Flüssigkeit gegen hohen Druck, insbesondere für einen Flüssigkeitschromatographen, mit einer Hubkolbenpumpe, einem Pumpenantrieb, einem Druckwandler zum Signalisieren des Pumpeninnendruckes, einer mit dem Druckwandler verbundenen Detektoreinrichtung und einer mit der Detektoreinrichtung und dem Pumpenantrieb verbundenen Regeleinrichtung zum Regeln des Förderstroms der Pumpe, dadurch gekennzeichnet, dass zum Regeln des mittleren Ansaugstromes der Pumpe bei variierender Zusammensetzung der geförderten Flüssigkeit
- die Detektoreinrichtung (31, 33, 35, 37) zum Signalisieren des Überganges zwischen der Dekompressionsphase und der Ansaugphase des Förderzyklus eingerichtet ist,
- die Regeleinrichtung (39, 41, 45) zum Bestimmen der für das Ansaugvolumen massgeblichen Phasenlage ($\varphi_2$) dieses Überganges innerhalb des Förderzyklus eingerichtet ist, und weiterhin
- die Regeleinrichtung (39, 41, 45) zum Umsetzen dieser Phasenlage ($\varphi_2$) in ein Regelsignal eingerichtet ist, welches bei einer Änderung der Phasenlage ($\varphi_2$) die Antriebsgeschwindigkeit zur Kompensation des veränderten Ansaugvolumens so ändert, dass der mittlere Ansaugstrom der Pumpe gleich bleibt.

2. Vorrichtung nach Anspruch 1, dadurch gekennzeichnet, dass die Regeleinrichtung (45) zum Regeln der Antriebsgeschwindigkeit der Pumpe die Zeitdauer T jedes Förderzyklus nach der Beziehung

$$T = \frac{0{,}5 \, \hat{V}_d}{\bar{V}_o} (1 - \cos \varphi 2)$$

einstellt, wobei $\hat{V}_d$ den Pumpenhubraum, $\bar{V}_o$ den gewünschten mittleren Ansaugstrom der Pumpe und $\varphi_2$ die Phasenlage des Übergangs zwischen der Dekompressionsphase und der Ansaugphase des Förderzyklus bedeuten.

3. Vorrichtung nach Anspruch 1 oder 2, dadurch gekennzeichnet, dass zum Signalisieren des Überganges zwischen der Dekompressionsphase und der Ansaugphase des Förderzyklus
- zwei dem Druckwandler (29) in Reihe nachgeschaltete Differenzierglieder (33, 35) zur Bildung der zweiten Ableitung des Ausgangssignals des Druckwandlers nach der Zeit sowie
- ein diesen nachgeschalteter Null-Durchgangsdetektor (38) vorgesehen sind, und dass zum Bestimmen der Phasenlage dieses Überganges innerhalb des Förderzyklus
- ein Winkelcodierer (17, 41) für die Erfassung der Winkelstellung einer Antriebswelle der Pumpe, sowie
- ein Phasendetektor (39) vorgesehen ist, der aus den Ausgangssignalen des Winkelcodierers und des Nulldurchgangs-Detektors die Phasenlage des Überganges bestimmt.

4. Vorrichtung nach einem der Ansprüche 1 bis 3, dadurch gekennzeichnet, dass zum Variieren der Zusammensetzung der geförderten Flüssigkeit auf der Saugseite der Pumpe eine zwischen zwei Zuführungsleitungen umschaltbare Proportioniereinrichtung (25, 27) zum Mischen zweier zugeführter Flüssigkeiten vorgesehen ist, und dass eine Steuereinrichtung (47) vorgesehen ist, die das Mischungsverhältnis durch Umschalten der Proportioniereinrichtung zwischen der ersten und der zweiten Zuführungsleitung zu einem bestimmten Umschaltzeitpunkt bestimmt, wobei die Phasenlage des Umschaltzeitpunktes innerhalb des Förderzyklus der Pumpe durch die Steuereinrichtung (47) vorgegeben wird zu

$$\varphi_3 = -arc\ cos\ (\frac{\%B(cos\ \varphi_2 - 1)}{100} + 1) + 2\pi$$

wobei %B den Volumenanteil der einen Flüssigkeit (B) in der Mischung (A + B) und $\varphi_2$ die Phasenlage des Übergangs zwischen der Dekompressionsphase und der Ansaugphase des Förderzyklus bedeuten.

5. Vorrichtung nach einem der Ansprüche 1 bis 4, dadurch gekennzeichnet, dass der Pumpe auf der Druckseite ein Pulsationsdämpfer (21) nachgeschaltet ist, der ein im Förderstrom liegendes druckabhängiges Volumen (61) aufweist, welches durch eine Membran (63) von einem mit einer Dämpfungsflüssigkeit (67) gefüllten Raum getrennt ist.

6. Vorrichtung nach Anspruch 5, dadurch gekennzeichnet, dass die Temperatur des mit der Dämpfungsflüssigkeit (67) gefüllten Raums regelbar ist, derart, dass der Mittelwert des im Förderstrom liegenden Volumens (61) konstant gehalten wird.

**Claims**

1. Apparatus for feeding liquid against high pressure, in particular for a liquid chromatograph, including a reciprocating piston pump, a pump drive, a pressure transducer for signaling the internal pressure of the pump, detecting means coupled to the pressure transducer, and regulating means coupled to the detecting means and to the pump drive for regulating the liquid flow fed by the pump, characterized in that, for regulating the average intake flow rate of the pump at varying composition of the pumped liquid,
– the detecting means (31, 33, 35, 37) is operative to signal the transition between the decompression phase and the aspiration phase of the feed cycle of the pump,
– the regulating means (39, 41, 45) is operative to detect the phase position ($\varphi_2$) of this transition within the feed cycle of the pump, which phase position determines the aspiration volume, and furthermore
– the regulating means (39, 41, 45) is operative to convert this phase position ($\varphi_2$) into a regulating signal which at a change of this phase position ($\varphi_2$) changes the speed of the driving means to compensate for the changed aspiration volume in such a way that the average intake flow rate of the pump is kept constant.

2. Apparatus as in claim 1, characterized in that, for regulating the speed of the pump drive, the regulating means (45) adjusts the time duration T of each feed cycle in accordance with the relation

$$T = \frac{0.5\ \hat{V}_d}{\bar{V}_o}\ (1 - cos\ \varphi2)$$

wherein $\hat{V}_d$ is the piston stroke volume of the pump, $\bar{V}_o$ is the desired average intake flow rate and $\varphi_2$ is the phase position of the transition between the decompression phase and the aspiration phase of the feed cycle of the pump.

3. Apparatus as in claim 1 or 2, characterized in that, for signaling the transition between the decompression phase and the aspiration phase of the feed cycle, there are provided
– two series-connected differentiators (33, 35) coupled to the pressure transducer (29) for deriving the second time derivative of the output signal of the pressure transducer, and
– a zero-crossing detector (38) connected in series with the differentiators, and that, for determining the phase position of this transition within the feed cycle,
– an angle encoder (17, 41) is provided for capturing the angular position of a shaft driving the pump, and
– a phase detector (39) is provided which determines the phase position of the transition from the output signals of the angle encoder and the zero-crossing detector.

4. Apparatus as in one of claims 1 through 3, characterized in that, for varying the composition of the pumped liquid, a proportioning means is connected between first and second feeding lines and the intake port of the pump, the proportioning means being operative to switch between the feed lines for mixing first and second fluids conducted by the feeding lines, that a controlling means is provided which determines the mixing ratio of the first and second liquids by switching the proportioning means from the first feeding line to the second feeding line at a predetermined switching time, and that the phase position of the switching time within the feed cycle of the pump is determined by the controlling means (47) as

$$\varphi_3 = -arc\ cos\ (\frac{\%B(cos\ \varphi_2 - 1)}{100} + 1) + 2\pi$$

wherein %B is the volume fraction of the second liquid (B) in the mixture (A + B), and $\varphi_2$ is the phase position of the transition between the decompression portion and the aspiration portion of the feed cycle of the pump.

5. Apparatus as in one of claims 1 through 4, characterized in that there is coupled a pulse damper (21) to the pump on its feed side which has a pressure-dependent volume (61) positioned in the liquid stream fed by the pump which volume is separated by a membrane (63) from a chamber (67) filled with a damping liquid.

6. Apparatus as in claim 5, characterized in that the temperature of the chamber (67) filled with the damping liquid is controllable such that the time-average of the volume holding the liquid stream fed by the pump is held constant.

## Revendications

1. Dispositif pour débiter un liquide en opposition à une pression élevée, notamment pour des chromatographes à liquide, comportant une pompe à piston alternatif, un entraînement de pompe, un convertisseur de pression pour signaler la pression interne de la pompe, un dispositif de détection relié au convertisseur de pression et un dispositif de régulation relié au dispositif de détection et à l'entraînement de pompe pour la régulation du débit de la pompe, caractérisé en ce que, pour une régulation du débit d'admission moyen de la pompe dans le cas d'une composition variable du liquide refoulé,

– le dispositif de détection (31, 33, 35, 37) est agencé pour une signalisation de la transition entre la phase de décompression et la phase d'aspiration du cycle de refoulement,

– le dispositif de régulation (39, 41, 45) est agencé pour définir l'angle de phase ($\varphi_2$) déterminant pour le volume d'aspiration, de cette transition à l'intérieur du cycle de refoulement, et en outre

– le dispositif de régulation (39, 41, 45) est agencé pour convertir cet angle de phase ($\varphi_2$) en un signal de régulation qui, en cas de variation de l'angle de phase ($\varphi_2$), modifie la vitesse d'entraînement, en vue d'une compensation du volume d'aspiration modifié, de telle sorte que le débit moyen admis dans la pompe reste constant.

2. Dispositif selon la revendication 1, caractérisé en ce que le dispositif de régulation (45) assure, pour une régulation de la vitesse d'entraînement de la pompe, un réglage de la durée T de chaque cycle de refoulement conformément à la relation:

$$T = \frac{0,5\ \hat{V}_d}{\bar{V}_o}\ (1 - \cos\ \varphi2)$$

où $\hat{V}_d$ désigne la cylindrée de pompe, $\bar{V}_o$ le volume d'admission moyen désiré pour la pompe et $\varphi_2$ l'angle de phase de la transition entre la phase de décompression et la phase d'aspiration du cycle de refoulement.

3. Dispositif selon la revendication 1 ou 2, caractérisé en ce que pour la signalisation de la transition entre la phase de décompression et la phase d'aspiration du cycle de refoulement, il est prévu:

– deux organes de différenciation (33, 35) branchés en série avec le convertisseur de pression (29) pour former la dérivée seconde du signal de sortie du convertisseur de pression en fonction du temps, et

– un détecteur de passage au zéro (38) placé à leur suite, et en ce que pour la détermination de l'angle de phase de cette transition à l'intérieur du cycle de refoulement il est prévu:

– un codeur angulaire (17, 41) pour capter la position angulaire d'un arbre d'entraînement de la pompe, et

– un détecteur de phase (39), qui détermine l'angle de phase de la transition à partir des signaux de sortie du codeur angulaire et du détecteur de passage au zéro.

4. Dispositif selon l'une des revendications 1 à 3, caractérisé en ce que, pour faire varier la composition du liquide refoulé, il est prévu du côté d'admission de la pompe un dispositif de proportionnement (25, 27), commutable entre deux conduits d'alimentation et servant au mélange de deux liquides introduits, et en ce qu'il est prévu un dispositif de commande (47) qui détermine le rapport de mélange par commutation du dispositif de proportionnement entre le premier et le second conduit d'alimentation à un instant déterminé de commutation, l'angle de phase de l'instant de commutation à l'intérieur du cycle de refoulement de la pompe étant prédéterminé par le dispositif de commande sous la forme:

$$\varphi_3 = -\text{arc}\ \cos\ (\frac{\%B(\cos\ \varphi_2 - 1)}{100} + 1) + 2\pi,$$

%B désignant la proportion volumique d'un des liquides (B) dans le mélange (A + B) et $\varphi_2$ définissant l'angle de phase de la transition entre la phase de décompression et la phase d'aspiration du cycle de refoulement.

5. Dispositif selon l'une des revendications 1 à 4, caractérisé en ce qu'il est prévu en aval de la pompe, du côté de refoulement, un amortisseur de pulsations (21) qui comporte un volume (61) fonction de la pression, placé dans le courant de refoulement et qui est séparé par une membrane (63) d'un espace rempli d'un liquide d'amortissement (67).

6. Dispositif selon la revendication 5, caractérisé en ce que la température de l'espace rempli par le liquide d'amortissement (67) est réglable de telle sorte que la valeur moyenne du volume (61) placé dans le courant de refoulement soit maintenue constante.

**Fig. 1**

**Fig. 4**

Fig. 2

Fig. 2a

Fig. 2b

Fig. 2c

Fig. 2d

Fig. 2e

**Fig. 3**

0 077 908